# EUROPEAN PATENT APPLICATION

(11) **EP 3 876 608 A1**
(43) Date of publication of application: **08.09.2021**
(21) Application number: 18939003.2
(22) Date of filing: 29.10.2018
(51) Int. Cl.: H04W 52/02

(54) **METHOD AND APPARATUS FOR REDUCING TERMINAL POWER CONSUMPTION, AND TERMINAL**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); YANG, Ning, Dongguan, Guangdong 523860 (CN)
(74) Representative: Ipside
(86) International application number: PCT/CN2018/112502
(87) International publication number: WO 2020/087231

(57) **Abstract**

Embodiments of the present application provide a method and an apparatus for reducing terminal power consumption, and a terminal, including: sending, by a terminal, a first request message to a network, where the first request message is used for requesting to reduce terminal power consumption; receiving, by the terminal, first instruction information sent by the network, and executing an operation of reducing power consumption based on the first instruction information.

## Description

### TECHNICAL FIELD

Embodiments of the present application relate to the technical field of mobile communications, in particular to a method and an apparatus for reducing terminal power consumption, and a terminal.

### BACKGROUND

In a new radio (NR, New Radio) system, power consumption of a terminal is very large. For example, monitoring scheduling information by the terminal, monitoring wireless link quality by the terminal, various measurement reporting by the terminal, increasing applications supported by the terminal and the like will all increase the power consumption of the terminal, causing the terminal to heat up, and even damaging the terminal. Therefore, how to effectively reduce the power consumption of the terminal is a problem to be solved.

### SUMMARY

Embodiments of the present application provide a method and an apparatus for reducing terminal power consumption, and a terminal.

A method for reducing terminal power consumption provided by an embodiment of the present application includes:
sending, by a terminal, a first request message to a network, where the first request message is used for requesting to reduce terminal power consumption;
receiving, by the terminal, first instruction information sent by the network, and executing an operation of reducing power consumption based on the first instruction information.

An apparatus for reducing terminal power consumption provided by an embodiment of the present application includes:
a sending unit, configured to send a first request message to a network, where the first request message is used for requesting to reduce terminal power consumption;
a receiving unit, configured to receive first instruction information sent by the network;
an executing unit, configured to execute an operation of reducing power consumption based on the first instruction information.

A terminal provided by an embodiment of the present application includes a processor and a memory. The memory is configured to store a computer program, and the processor is configured to call and run the computer program stored in the memory to execute the method for reducing terminal power consumption described above.

A chip provided by an embodiment of the present application is configured to implement the method for reducing terminal power consumption described above.

Specifically, the chip includes a processor, configured to call and run a computer program from a memory, so that a device installed the chip executes the method for reducing terminal power consumption described above.

A computer readable storage medium provided by an embodiment of the present application is configured to store a computer program, where the computer program causes a computer to execute the method for reducing terminal power consumption described above.

A computer program product provided by an embodiment of the present application includes computer program instructions, where the computer program instructions cause a computer to execute the method for reducing terminal power consumption described above.

A computer program provided by an embodiment of the present application causes a computer to execute the method for reducing terminal power consumption described above when the computer program is running on the computer.

Through the technical solutions described above, the terminal requests a network side to change or deactivate some configurations, thereby achieving a purpose of energy saving for the terminal, and meanwhile reducing heating of the terminal and prolonging endurance time of the terminal.

### BRIEF DESCRIPTION OF DRAWINGS

The drawings described here are used for providing a further understanding of the present application and constitute a part of the present application. The illustrative embodiments of the present application and descriptions thereof are used for explaining the present application, and do not constitute an improper limitation to the present application. In the drawings:
FIG. 1 is a schematic diagram of a communication system architecture provided by an embodiment of the present application;
FIG. 2 is a schematic flowchart of a method for reducing terminal power consumption provided by an embodiment of the present application;
FIG. 3 is a schematic structural composition diagram of an apparatus for reducing terminal power consumption provided by an embodiment of the present application;
FIG. 4 is a schematic structural diagram of a communication device provided by an embodiment of the present application;
FIG. 5 is a schematic structural diagram of a chip according to an embodiment of the present application;
FIG. 6 is a schematic block diagram of a communication system provided by an embodiment of the present application.

### DESCRIPTION OF EMBODIMENTS

The technical solutions in embodiments of the present application will be described below with reference to the drawings in the embodiments of the present application. Obviously, the described embodiments are part of the embodiments of the present application, not all of them. Based on the embodiments in the present application, all other embodiments obtained by those of ordinary skill in the art without creative effort belong to the protection scope of the present application.

The technical solutions of the embodiments of the present application can be applied to various communication systems, such as a global system of mobile communication (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), a universal mobile telecommunication system (Universal Mobile Telecommunication System, UMTS), a worldwide interoperability for microwave access (Worldwide Interoperability for Microwave Access, WiMAX) communication system or a 5G system, etc.

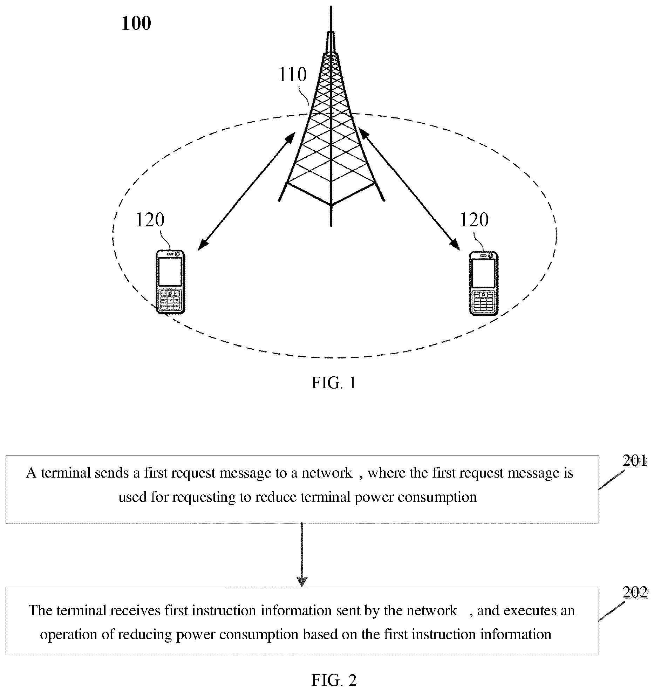

Exemplarily, a communication system 100 to which the embodiments of the present application are applied is shown in FIG. 1. The communication system 100 can include a network device 110, and the network device 110 can be a device that communicates with a terminal 120 (or called a communication terminal or a terminal). The network device 110 can provide communication coverage for a specific geographic area, and can communicate with terminals located in the coverage area. Optionally, the network device 110 may be a base station (Base Transceiver Station, BTS) in a GSM system or a CDMA system, or a base station (NodeB, NB) in a WCDMA system, or an evolutional base station (Evolutional Node B, eNB or eNodeB) in an LTE system, or a wireless controller in a cloud radio access network (Cloud Radio Access Network, CRAN); or the network device may be a mobile switching center, a relay station, an access point, a vehicle-mounted device, a wearable device, a hub, a switch, a bridge, a router, a network side device in a 5G network, or a network device in a future evolutional public land mobile network (Public Land Mobile Network, PLMN), etc.

The communication system 100 also includes at least one terminal 120 located within the coverage area of the network device 110. The "terminal" as used herein includes, but is not limited to, connections via a wired line, such as via a public switched telephone network (Public Switched Telephone Networks, PSTN), a digital subscriber line (Digital Subscriber Line, DSL), a digital cable, and a direct cable connection; and/or via another data connection/network; and/or via a wireless interface, for example, for a cellular network, a wireless local area network (Wireless Local Area Network, WLAN), a digital TV network such as a DVB-H network, a satellite network, an AM-FM broadcast transmitter; and/or via an apparatus of another terminal, configured to receive/send communication signals; and/or via an internet of things (Internet of Things, IoT) device. A terminal configured to communicate through a wireless interface may be referred to as a "wireless communication terminal", a "wireless terminal" or a "mobile terminal". Examples of the mobile terminal include, but are not limited to, a satellite or cellular phone; a personal communications system (Personal Communications System, PCS) terminal that can combine a cellular radio phone with data processing, fax, and data communication capabilities; an PDA that can include a radio phone, a pager, an Internet/intranet access, a Web browser, a memo pad, a calendar and/or a global positioning system (Global Positioning System, GPS) receiver; and a conventional laptop and/or palmtop receiver or other electronic apparatuses including a radio telephone transceiver. The terminal can refer to an access terminal, a user equipment (User Equipment, UE), a user unit, a user station, a mobile radio station, a mobile station, a remote station, a remote terminal, a mobile device, a user terminal, a terminal, a wireless communication device, a user agent or a user apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device with a wireless communication function, or other processing devices connected to wireless modem and having a wireless communication function, an in-vehicle device, a wearable device, a terminal in the 5G network, or a terminal in the future evolutional PLMN, etc.

Optionally, device to device (Device to Device, D2D) communication can be performed between terminals 120.

Optionally, the 5G system or 5G network may also be referred to as a new radio (New Radio, NR) system or an NR network.

FIG. 1 shows one network device and two terminals exemplarily. Optionally, the communication system 100 may include multiple network devices and other numbers of terminals may be included in the coverage of each network device, which is not limited in the embodiments of the present application.

Optionally, the communication system 100 may further include other network entities such as a network controller, a mobility management entity, etc., which is not limited in the embodiments of the present application.

It should be understood that a device with a communication function in the network/system in the embodiments of the present application may be referred to as a communication device. Taking the communication system 100 shown in FIG. 1 as an example, the communication device may include the network device 110 and the terminal 120 with communication functions, and the network device 110 and the terminal 120 may be a specific device described above, which will not be repeated here. The communication device may further include other devices in the communication system 100, for example, other network entities such as a network controller, a mobility management entity and others, which is not limited in the embodiments of the present application.

It should be understood that the terms "system" and "network" are often used interchangeably herein. The term "and/or" herein is only an association relationship describing associated objects, and means that there may be three kinds of relationships. For example, the expression "A and/or B" may indicate three cases: A exists alone, both A and B exist at the same time, and B exists alone. In addition, the character "/" herein generally indicates that the associated objects before and after the character are in an "or" relationship.

In order to satisfy people's pursuit of service rate, delay, high-speed mobility and energy efficiency, as well as diversity and complexity of services in future life, the 3rd generation partnership project (3rd Generation Partnership Project, 3GPP) international standard organization began to research and develop the 5th generation (5G, 5th Generation) mobile communication technology.

Main application scenarios of 5G are: enhanced mobile broadband (eMBB), ultra-reliable and low latency communications (URLLC), massive machine type communications (mMTC).

The technical solutions of the embodiments of the present application are mainly applied to the 5G mobile communication system. Of course, the technical solutions of the embodiments of the present application are not limited to the 5G mobile communication system, but can also be applied to other types of mobile communication systems. The main application scenarios in the 5G mobile communication system are described in the following:
1) eMBB scenario: eMBB targets obtaining multimedia content, services and data by users, and service demand thereof is growing very rapidly. Since eMBB may be deployed in different scenarios, such as indoor, in an urban area and in a rural area, etc., and service capabilities and requirements thereof are quite different, a service has to be analyzed in combination with a specific deployment scenario.
2) URLLC scenario: typical applications of URLLC include: industrial automation, power automation, remote medical operation, traffic safety guarantee, etc.
3) mMTC scenario: typical features of URLLC include: high connection density, small data volume, delay-insensitive services, low cost and long service life of modules, etc.

In early deployment of NR, it is difficult to achieve complete NR coverage, so a typical network coverage is a combination of long term evolution (LTE, Long Term Evolution) coverage and NR coverage. In addition, in order to protect early investment on LTE by mobile operators, a working mode of tight interworking between LTE and NR is proposed. Of course, an NR cell may also be deployed independently.

In NR discussion, it was agreed that in R15, the maximum channel bandwidth of each NR carrier is 100MHz for low frequencies and 400MHz for high frequencies, and the 100Mhz/400Mhz channel bandwidth is continuous. If a UE keeps working on a broadband carrier, power consumption of the UE is very large. Therefore, it is suggested that a radio frequency (RF) bandwidth of the UE can be adjusted according to actual throughput of the UE.

In NR, a UE in a connected state needs to acquire scheduling information for monitoring paging in order to acquire a system broadcast update notification message and a PWS reception notification message, and thus to acquire the latest system broadcast information and PWS information. Therefore, the UE in the connected state will acquire updated system broadcast information once receiving the system broadcast update notification message, and the UE in the connected state will acquire PWS information once receiving the PWS reception notification message. However, for the UE in the connected state, it can be chosen to configure the updated system broadcast information and PWS information through radio resource control (RRC, Radio Resource Control) dedicated signaling.

On the other hand, in NR, the UE in the connected state needs to monitor a wireless link, so it is necessary for a network side to configure reference signals (RSs, Reference Signals) to monitor quality of the wireless link. However, the number of RS configurations is limited.

On the further hand, in NR, the UE in the connected state needs to make various measurements such as radio resource measurement (RRM, Radio Resource Measurement) and radio link measurement (RLM, Radio Link Measurement) and the like. Mobility requirements of the UE are mainly met for the RRM measurement, and at the same time the RRM measurement with reduced accuracy requirements is supported in standard.

FIG. 2 is a schematic flowchart of a method for reducing terminal power consumption provided by an embodiment of the present application. As shown in FIG. 2, the method for reducing terminal power consumption includes the following steps:

Step 201: a terminal sends a first request message to a network, where the first request message is used for requesting to reduce terminal power consumption.

In the embodiment of the present application, the terminal can be any device capable of communicating with the network, such as a mobile phone, a tablet computer, an in-vehicle terminal, a notebook etc.

In the embodiment of the present application, the terminal sends the first request message to the network when a first condition is met.

In an implementation, the terminal sends the first request message to the network when the terminal detects that power of the terminal is less than or equal to a first threshold.

In another implementation, the terminal sends the first request message to the network when the terminal detects that a heating degree of the terminal is greater than or equal to a second threshold.

Here, the first threshold and/or the second threshold may be set by a terminal system. More flexibly, a user can set the first threshold and/or the second threshold on the terminal himself/herself.

For example: the terminal sends the first request message to the network to request to reduce the terminal power consumption when it is detected that the power is lower than 10%.

For another example: the terminal sends the first request message to the network to request to reduce the terminal power consumption when it is detected that temperature of a processor is higher than T degrees.

Step 202: the terminal receives first instruction information sent by the network, and executes an operation of reducing power consumption based on the first instruction information.

In the embodiment of the present application, the first request message is further used for requesting to reduce a configuration of the terminal. Implementations of requesting to reduce the configuration of the terminal will be described below. It should be noted that the following implementations may be implemented alone or in combination at will.

Implementation 1: requesting a maximum modulation and coding scheme (MCS, Modulation and Coding Scheme) used by the network side; or, suggesting an MCS list used by the network side.

The network side sets scheduling information according to the maximum MCS requested to use or the MCS list suggested using, after receiving the first request message.

Implementation 2: requesting the network side to send updated system broadcast information and/or PWS information through dedicated RRC signaling.

The network side configures, using the dedicated RRC signaling, configuration information of a control resource set (CoreSet) for monitoring a paging RNTI (P-RNTI) and a serving RNTI (S-RNTI), after receiving the first request message. It should be noted that the network side configures the configuration information of the CoreSet on a band width part (BWP, Band Width Part) configured by the terminal, and the CoreSet is used for monitoring the P-RNTI and the S-RNTI. Or, the network side sends an instruction to the terminal to instruct the terminal not to monitor the P-RNTI and the S-RNTI, but to ignore the configuration information of the CoreSet for monitoring the P-RNTI and the S-RNTI, after receiving the first request message.

Based on this, the terminal receives the dedicated RRC signaling sent by the network, where the dedicated RRC signaling is used for configuring a first control resource set on the BWP of the terminal, and the first control resource set is used for monitoring the P-RNTI and the S-RNTI; or, the terminal receives the first instruction information sent by the network, where the first instruction information is used for instructing the terminal not to monitor the P-RNTI and the S-RNTI and/or to ignore the configuration of the first control resource set. Further, the first instruction information is a MAC CE or a PDCCH or RRC signaling.

In the solutions described above, the terminal stops monitoring the P-RNTI and the S-RNTI after receiving the first instruction information.

Implementation 3: requesting the network side to reduce the number of an RS; or, giving the maximum number of the RS to the network side; where the RS is used for wireless link detection.

Here, the terminal can request the network side to configure the RS with a low number, or can give the maximum number of the RS for the wireless link detection.

The network side reconfigures an RS configuration for RLM measurement using dedicated RRC signaling after receiving the first request message. Or, the network side sends a command in manner of a media access control control element (MAC CE) or a physical downlink control channel (PDCCH) to instruct to deactivate some RS configurations for RLM, after receiving the first request message.

Based on this, the terminal receives the dedicated RRC signaling sent by the network, where the dedicated RRC signaling is used for reconfiguring the RS for the RLM measurement; or, the terminal receives the first instruction information which is sent by the network using the MAC CE or the PDCCH, where the first instruction information is used for indicating a deactivated RS configuration for the RLM measurement.

Further, the first instruction information includes first bitmap information. Each bit in the first bitmap information corresponds to one RS configuration for the RLM measurement, and a value of the bit is used for representing whether a corresponding RS configuration is deactivated or activated. For example, the first instruction information includes a bitmap corresponding to the RS configuration, and each bit of the bitmap corresponds to one RS configuration for the RLM measurement, where RS configurations correspond one-to-one to the bits in the bitmap according to the order of the RS configurations. If the value of the bit is 1, it means that the corresponding RS configuration is deactivated; if the value of the bit is 0, it means that the corresponding RS configuration is activated.

In the above solutions, the terminal makes the RLM measurement according to a reconfigured RS, if the terminal receives the dedicated RRC signaling sent by the network; the terminal stops making measurement for the deactivated RS configuration according to an instruction of the first instruction information, if the terminal receives the first instruction information which is sent by the network using the MAC CE or the PDCCH.

Implementation 4: requesting the network side to reduce the number of an RRM measurement configuration; or, giving the maximum number of the RRM measurement configuration to the network side; or a list of frequencies and/or a list of radio access types (RATs, Radio Access Types) that the network side is expected to measure; or a list of frequencies and/or a list of RATs that the network side is not expected to measure.

The network side reconfigures a configuration for RRM measurement using dedicated RRC signaling after receiving the first request message. Or, the network side sends a command in manner of a MAC CE or a PDCCH to instruct to deactivate some RRM measurement configurations, after receiving the first request message.

Based on this, the terminal receives the dedicated RRC signaling sent by the network, where the dedicated RRC signaling is used for reconfiguring the RRM measurement; or, the terminal receives the first instruction information which is sent by the network using the MAC CE or the PDCCH, where the first instruction information is used for indicating a deactivated RRM measurement configuration.

Further, the first instruction information includes second bitmap information. Each bit in the second bitmap information corresponds to one RRM measurement configuration, and a value of the bit is used for representing whether a corresponding RRM measurement configuration is deactivated or activated. For example, the first instruction information includes a bitmap corresponding to a measureid of the RRM measurement configuration, and each bit of the bitmap corresponds to the measureid of one RRM measurement configuration, where measureids of the RRM measurement configurations correspond one-to-one to the bits in the bitmap according to the order of the RRM measurement configurations. If the value of the bit is 1, it means that the corresponding RRM measurement configuration is deactivated; if the value of the bit is 0, it means that the corresponding RRM measurement configuration is activated.

In the above solutions, the terminal makes the RLM measurement according to a reconfigured RRM measurement configuration, if the terminal receives the dedicated RRC signaling sent by the network; the terminal stops making measurement for the deactivated RRM measurement configuration and stops reporting the corresponding measurement according to an instruction of the first instruction information, if the terminal receives the first instruction information which is sent by the network using the MAC CE or the PDCCH.

Implementation 5: requesting the network side to configure a measuring mode with reduced accuracy.

The network side sends a command to the terminal using RRC signaling or a MAC CE or a PDCCH to instruct that the terminal is allowed to make measurement using the mode with reduced accuracy.

Based on this, the terminal receives the first instruction information which is sent by the network using the RRC signaling or the MAC CE or the PDCCH, where the first instruction information is used for instructing that the terminal is allowed to make measurement using the measuring mode with reduced accuracy.

In the solutions described above, the terminal makes measurement using the measuring mode with reduced accuracy based on the first instruction information.

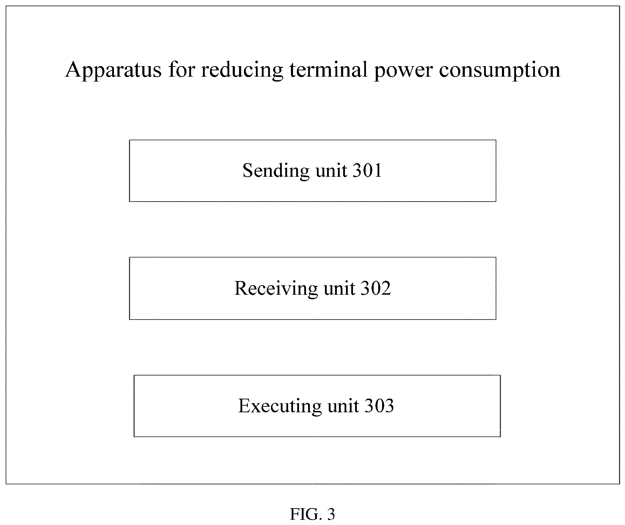

FIG. 3 is a schematic structural composition diagram of an apparatus for reducing terminal power consumption provided by an embodiment of the present application. As shown in FIG. 3, the apparatus includes:
a sending unit 301, configured to send a first request message to a network, where the first request message is used for requesting to reduce terminal power consumption;
a receiving unit 302, configured to receive first instruction information sent by the network;
an executing unit 303, configured to execute an operation of reducing power consumption based on the first instruction information.

In an implementation, the sending unit 301 is configured to send the first request message to the network when a first condition is met.

In an implementation, the sending unit 301 is configured to: send the first request message to the network when it is detected that power of the terminal is less than or equal to a first threshold; or, send the first request message to the network when it is detected that a heating degree of the terminal is greater than or equal to a second threshold.

In an implementation, the first request message is further used for requesting to reduce a configuration of the terminal, where the requesting to reduce the configuration of the terminal includes:
requesting a maximum MCS used by the network side; or,
suggesting an MCS list used by the network side.

In an implementation, the first request message is used for the network side to execute the following operation:
setting scheduling information according to the maximum MCS requested to use or the MCS list suggested using.

In an implementation, the first request message is further used for requesting to reduce the configuration of the terminal, where the requesting to reduce the configuration of the terminal includes:
requesting the network side to send updated system broadcast information and/or PWS information through dedicated RRC signaling.

In an implementation, the receiving unit 302 is configured to: receive the dedicated RRC signaling sent by the network, where the dedicated RRC signaling is used for configuring a first control resource set on a BWP of the terminal, and the first control resource set is used for monitoring a P-RNTI and an S-RNTI; or, receive the first instruction information sent by the network, where the first instruction information is used for instructing the terminal not to monitor the P-RNTI and the S-RNTI and/or to ignore the configuration of the first control resource set.

In an implementation, the first instruction information is a MAC CE or a PDCCH or RRC signaling.

In an implementation, the executing unit 303 is configured to stop monitoring the P-RNTI and the S-RNTI.

In an implementation, the first request message is further used for requesting to reduce the configuration of the terminal, where the requesting to reduce the configuration of the terminal includes:
requesting the network side to reduce the number of an RS; or,
giving the maximum number of the RS to the network side;
where the RS is used for wireless link detection.

In an implementation, the receiving unit 302 is configured to: receive dedicated RRC signaling sent by the network, where the dedicated RRC signaling is used for reconfiguring the RS for RLM measurement; or, receive the first instruction information which is sent by the network using the MAC CE or the PDCCH, where the first instruction information is used for indicating a deactivated RS configuration for the RLM measurement.

In an implementation, the first instruction information includes first bitmap information. Each bit in the first bitmap information corresponds to one RS configuration for the RLM measurement, and a value of the bit is used for representing whether a corresponding RS configuration is deactivated or activated.

In an implementation, the executing unit 303 is configured to: make the RLM measurement according to a reconfigured RS, if the receiving unit 302 receives the dedicated RRC signaling sent by the network; stop making measurement for the deactivated RS configuration according to an instruction of the first instruction information, if the receiving unit 302 receives the first instruction information which is sent by the network using the MAC CE or the PDCCH.

In an implementation, the first request message is further used for requesting to reduce the configuration of the terminal, where the requesting to reduce the configuration of the terminal includes:
requesting the network side to reduce the number of an RRM measurement configuration; or,
giving the maximum number of the RRM measurement configuration to the network side; or,
a list of frequencies and/or a list of RATs that the network side is expected to measure; or,
a list of frequencies and/or a list of RATs that the network side is not expected to measure.

In an implementation, the receiving unit 302 is configured to: receive dedicated RRC signaling sent by the network, where the dedicated RRC signaling is used for reconfiguring RRM measurement; or, receive the first instruction information which is sent by the network using the MAC CE or the PDCCH, where the first instruction information is used for indicating a deactivated RRM measurement configuration.

In an implementation, the first instruction information includes second bitmap information. Each bit in the second bitmap information corresponds to one RRM measurement configuration, and a value of the bit is used for representing whether a corresponding RRM measurement configuration is deactivated or activated.

In an implementation, the executing unit 303 is configured to: make the RLM measurement according to a reconfigured RRM measurement configuration, if the receiving unit 302 receives the dedicated RRC signaling sent by the network; stop making measurement for the deactivated RRM measurement configuration and stop reporting the corresponding measurement according to an instruction of the first instruction information, if the receiving unit 302 receives the first instruction information which is sent by the network using the MAC CE or the PDCCH.

In an implementation, the first request message is further used for requesting to reduce the configuration of the terminal, where the requesting to reduce the configuration of the terminal includes:
requesting the network side to configure a measuring mode with reduced accuracy.

In an implementation, the receiving unit 302 is configured to receive the first instruction information which is sent by the network using RRC signaling or a MAC CE or a PDCCH, where the first instruction information is used for instructing that the terminal is allowed to make measurement using the measuring mode with reduced accuracy.

In an implementation, the executing unit 303 is configured to make measurement using the measuring mode with reduced accuracy based on the first instruction information.

It should be understood by those skilled in the art that the related description of the apparatus for reducing terminal power consumption described above in the embodiments of the present application can be understood with reference to the related description of the method for reducing terminal power consumption in the embodiments of the present application.

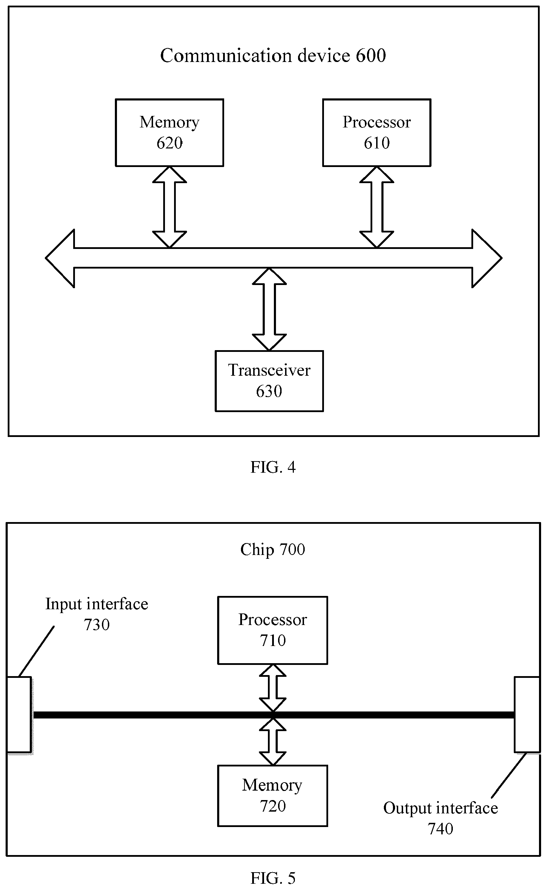

FIG. 4 is a schematic structural diagram of a communication device 600 provided by an embodiment of the present application. The communication device may be a terminal. The communication device 600 shown in FIG. 4 includes a processor 610, and the processor 610 can call and run a computer program from a memory to implement the methods in the embodiments of the present application.

Optionally, as shown in FIG. 4, the communication device 600 can further include a memory 620. The processor 610 can call and run a computer program from the memory 620 to implement the methods in the embodiments of the present application.

The memory 620 may be a separate device independent of the processor 610 or integrated into the processor 610.

Optionally, as shown in FIG. 4, the communication device 600 can further include a transceiver 630, and the processor 610 can control the transceiver 630 to communicate with other devices. Specifically, the transceiver may send information or data to other devices, or receive information or data sent by other devices.

The transceiver 630 may include a transmitter and a receiver. The transceiver 630 may further include an antenna, and the number of the antenna may be one or more.

Optionally, the communication device 600 may be specifically a network device according to the embodiments of the present application, and the communication device 600 can implement corresponding processes implemented by the network device in respective methods according to the embodiments of the present application, which will not be repeated here for brevity.

Optionally, the communication device 600 may be specifically a mobile terminal/terminal according to the embodiments of the present application, and the communication device 600 can implement corresponding processes implemented by the mobile terminal/terminal in respective methods according to the embodiments of the present application, which will not be repeated here for brevity.

FIG. 5 is a schematic structural diagram of a chip according to an embodiment of the present application. The chip 700 shown in FIG. 5 includes a processor 710, and the processor 710 can call and run a computer program from a memory to implement the methods in the embodiments of the present application.

Optionally, as shown in FIG. 5, the chip 700 can further include a memory 720. The processor 710 can call and run a computer program from the memory 720 to implement the methods in the embodiments of the present application.

The memory 720 may be a separate device independent of the processor 710 or integrated into the processor 710.

Optionally, the chip 700 can further include an input interface 730. The processor 710 can control the input interface 730 to communicate with other devices or chips, and specifically, can acquire information or data sent by other devices or chips.

Optionally, the chip 700 can further include an output interface 740. The processor 710 can control the output interface 740 to communicate with other devices or chips, and specifically, can output information or data to other devices or chips.

Optionally, the chip can be applied to the network device in the embodiments of the present application, and the chip can implement corresponding processes implemented by the network device in respective methods according to the embodiments of the present application, which will not be repeated here for brevity.

Optionally, the chip can be applied to the mobile terminal/terminal in the embodiments of the present application, and the chip can implement corresponding processes implemented by the mobile terminal/terminal in respective methods according to the embodiments of the present application, which will not be repeated here for brevity.

It should be understood that the chips mentioned in the embodiments of the present application may also be called a system-level chip, a system-on-chip, a chip system, an SoC chip, or the like.

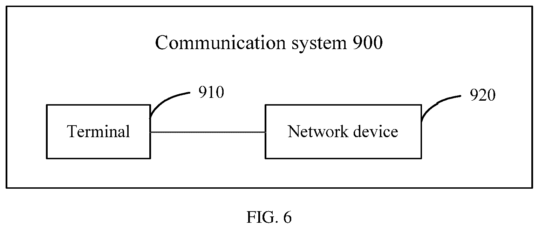

FIG. 6 is a schematic block diagram of a communication system 900 provided by an embodiment of the present application. As shown in FIG. 6, the communication system 900 includes a terminal 910 and a network device 920.

The terminal 910 can be used for implementing corresponding functions implemented by the terminal in the methods described above, and the network device 920 can be used for implementing corresponding functions implemented by the network device in the methods described above. For brevity, details are not repeated here.

It should be understood that the processor of the embodiments of the present application may be an integrated circuit chip with signal processing capability. In the implementation process, the steps of the method embodiments described above can be completed by an integrated logic circuit in hardware of a processor or by instructions in the form of software. The processor mentioned above may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, discrete gates or transistor logic devices, discrete hardware components, which can implement or execute the methods, steps and logic block diagrams disclosed in the embodiments of the present application. The general-purpose processor may be a microprocessor or the processor may also be any conventional processor or the like. The steps of the methods disclosed in combination with the embodiments of the present application can be directly embodied as being executed and completed by a hardware decoding processor, or being executed and completed by a combination of hardware and software modules in the decoding processor. The software modules can be located in a mature storage medium in the art such as a random access memory, a flash memory, a read-only memory, a programmable read-only memory, an electrically erasable programmable memory, a register, etc. The storage medium is located in the memory, and the processor reads information in the memory and completes the steps of the methods described above in combination with hardware thereof.

It can be understood that the memory in embodiments of the present application may be a volatile memory or a non-volatile memory, or may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), which is used as an external cache. By way of exemplary but not restrictive description, many forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) ) and a direct rambus random access memory (Direct Rambus RAM, DR RAM). It should be noted that the memories of the systems and methods described herein are intended to include, but are not limited to, these and any other suitable types of memories.

It should be understood that the memories described above are exemplary but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synch link dynamic random access memory (synch link DRAM, SLDRAM) and a direct memory bus random access memory (Direct Rambus RAM, DR RAM), etc. That is to say, the memories in the embodiments of the present application are intended to include, but not limited to, these and any other suitable types of memories.

An embodiment of the present application also provides a computer readable storage medium for storing a computer program.

Optionally, the computer readable storage medium can be applied to the network device in the embodiments of the present application, and the computer program causes a computer to execute corresponding processes implemented by the network device in respective methods according to the embodiments of the present application, which will not be repeated here for brevity.

Optionally, the computer readable storage medium can be applied to the mobile terminal/terminal in the embodiments of the present application, and the computer program causes the computer to execute corresponding processes implemented by the mobile terminal/terminal in respective methods according to the embodiments of the present application, which will not be repeated here for brevity.

An embodiment of the present application also provides a computer program product, which includes computer program instructions.

Optionally, the computer program product can be applied to the network device in the embodiments of the present application, and the computer program instructions cause a computer to execute corresponding processes implemented by the network device in respective methods according to the embodiments of the present application, which will not be repeated here for brevity.

Optionally, the computer program product can be applied to the mobile terminal/terminal in the embodiments of the present application, and the computer program instructions cause the computer to execute corresponding processes implemented by the mobile terminal/terminal in respective methods according to the embodiments of the present application, which will not be repeated here for brevity.

An embodiment of the present application also provides a computer program.

Optionally, the computer program can be applied to the network device in the embodiments of the present application, and when the computer program runs on a computer, the computer is caused to execute corresponding processes implemented by the network device in respective methods according to the embodiments of the present application, which will not be repeated here for brevity.

Optionally, the computer program can be applied to the mobile terminal/terminal in the embodiments of the present application, and when the computer program runs on the computer, the computer is caused to execute corresponding processes implemented by the mobile terminal/terminal in respective methods according to the embodiments of the present application, which will not be repeated here for brevity.

Those ordinary skilled in the art can realize that the units and algorithm steps of the examples described in combination with the embodiments disclosed herein can be implemented by electronic hardware, or a combination of computer software and electronic hardware. Whether these functions are implemented in hardware or software depends on specific applications and design constraints of the technical solutions. Those skilled persons can use different methods to implement the described functions for each specific application, but such implementations should not be considered beyond the scope of the present application.

It can be clearly understood by those skilled in the art that for convenience and concise description, the corresponding processes in the method embodiments described above may be referred to for the specific working processes of the system, apparatus, and unit described above, and details are not repeated here.

It should be understood that in these embodiments provided in the present application, the disclosed system, apparatus and method may be implemented in other ways. For example, the apparatus embodiments described above are only illustrative. For example, the division of the units is only a logical function division. In actual implementation, there may be other division manners. For example, multiple units or components may be combined or may be integrated into another system, or some features can be ignored or not implemented. On the other hand, the mutual coupling or direct coupling or communication connection shown or discussed may be indirect coupling or communication connection through some interfaces, apparatuses or units, and may be in electrical, mechanical or other forms.

The units described as separate components may or may not be physically separated, and the components displayed as units may or may not be physical units, that is, they may be located in one place or distributed on multiple network units. Some or all of the units can be selected according to actual needs to achieve the objectives of the solutions of the embodiments.

In addition, the functional units in the embodiments of the present application may be integrated into one processing unit, or each unit may physically exist alone, or two or more units may be integrated into one unit.

If the functions are implemented in the form of software functional units and sold or used as an independent product, they can be stored in a computer readable storage medium. Based on this understanding, the technical solutions of the present application essentially, or the part that contributes to the prior art, or a part of the technical solutions can be embodied in the form of a software product, and the computer software product is stored in a storage medium, including several instructions used to cause a computer device (which may be a personal computer, a server, or a network device, etc.) to execute all or part of the steps of the methods described in the embodiments of the present application. The aforementioned storage medium includes: a U disk, a mobile hard disk, a read-only memory (Read-Only Memory, ROM), a random access memory (Random Access Memory, RAM), a magnetic disk, an optical disk, or other media that can store program codes.

The above description is only specific implementations of the present application, but the protection scope of the present application is not limited thereto. Any person skilled in the art can easily think of changes or substitutions within the technical scope disclosed in the present application, which should be covered within the protection scope of the present application. Therefore, the protection scope of the present application shall be subject to the protection scope of the claims.

## Claims

1. A method for reducing terminal power consumption, comprising:
sending, by a terminal, a first request message to a network, wherein the first request message is used for requesting to reduce terminal power consumption;
receiving, by the terminal, first instruction information sent by the network, and executing an operation of reducing power consumption based on the first instruction information.

2. The method according to claim 1, wherein the terminal sends the first request message to the network when a first condition is met.

3. The method according to claim 2, wherein sending, by the terminal, the first request message to the network when the first condition is met comprises:
sending, by the terminal, the first request message to the network when the terminal detects that power of the terminal is less than or equal to a first threshold; or,
sending, by the terminal, the first request message to the network when the terminal detects that a heating degree of the terminal is greater than or equal to a second threshold.

4. The method according to any one of claims 1-3, wherein the first request message is further used for requesting to reduce a configuration of the terminal, wherein the requesting to reduce the configuration of the terminal comprises:
requesting a maximum modulation and coding scheme MCS used by a network side; or,
suggesting an MCS list used by the network side.

5. The method according to claim 4, wherein the first request message is used for the network side to execute the following operation:
setting scheduling information according to the maximum MCS requested to use or the MCS list suggested using.

6. The method according to any one of claims 1-5, wherein the first request message is further used for requesting to reduce a configuration of the terminal, wherein the requesting to reduce the configuration of the terminal comprises:
requesting a network side to send updated system broadcast information and/or public warning system PWS information through dedicated RRC signaling.

7. The method according to claim 6, wherein the receiving, by the terminal, the first instruction information sent by the network comprises:
receiving, by the terminal, the dedicated RRC signaling sent by the network, wherein the dedicated RRC signaling is used for configuring a first control resource set on a BWP of the terminal, and the first control resource set is used for monitoring a P-RNTI and an S-RNTI; or,
receiving, by the terminal, the first instruction information sent by the network, wherein the first instruction information is used for instructing the terminal not to monitor the P-RNTI and the S-RNTI and/or to ignore a configuration of the first control resource set.

8. The method according to claim 7, wherein the first instruction information is a MAC CE or a PDCCH or RRC signaling.

9. The method according to claim 7 or 8, wherein the executing the operation of reducing power consumption based on the first instruction information comprises:
stopping, by the terminal, monitoring the P-RNTI and the S-RNTI after receiving the first instruction information.

10. The method according to any one of claims 1-9, wherein the first request message is further used for requesting to reduce a configuration of the terminal, wherein the requesting to reduce the configuration of the terminal comprises:
requesting a network side to reduce the number of a reference signal RS; or,
giving a maximum number of the RS to the network side;
wherein the RS is used for wireless link detection.

11. The method according to claim 10, wherein the receiving, by the terminal, the first instruction information sent by the network comprises:
receiving, by the terminal, dedicated RRC signaling sent by the network, wherein the dedicated RRC signaling is used for reconfiguring an RS for RLM measurement; or,
receiving, by the terminal, the first instruction information which is sent by the network using a MAC CE or a PDCCH, wherein the first instruction information is used for indicating a deactivated RS configuration for the RLM measurement.

12. The method according to claim 11, wherein the first instruction information comprises first bitmap information, each bit in the first bitmap information corresponds to one RS configuration for the RLM measurement, and a value of the bit is used for representing whether a corresponding RS configuration is deactivated or activated.

13. The method according to claim 11 or 12, wherein the executing the operation of reducing power consumption based on the first instruction information comprises:
making, by the terminal, the RLM measurement according to a reconfigured RS, if the terminal receives the dedicated RRC signaling sent by the network;
stopping, by the terminal, making measurement for the deactivated RS configuration according to an instruction of the first instruction information, if the terminal receives the first instruction information which is sent by the network using the MAC CE or the PDCCH.

14. The method according to any one of claims 1-13, wherein the first request message is further used for requesting to reduce a configuration of the terminal, wherein the requesting to reduce the configuration of the terminal comprises:
requesting a network side to reduce the number of an RRM measurement configuration; or,
giving a maximum number of the RRM measurement configuration to the network side; or,
a list of frequencies and/or a list of radio access types RATs that the network side is expected to measure; or,
a list of frequencies and/or a list of RATs that the network side is not expected to measure.

15. The method according to claim 14, wherein the receiving, by the terminal, the first instruction information sent by the network comprises:
receiving, by the terminal, dedicated RRC signaling sent by the network, wherein the dedicated RRC signaling is used for reconfiguring RRM measurement; or,
receiving, by the terminal, the first instruction information which is sent by the network using a MAC CE or a PDCCH, wherein the first instruction information is used for indicating a deactivated RRM measurement configuration.

16. The method according to claim 15, wherein the first instruction information comprises second bitmap information, each bit in the second bitmap information corresponds to one RRM measurement configuration, and a value of the bit is used for representing whether a corresponding RRM measurement configuration is deactivated or activated.

17. The method according to claim 15 or 16, wherein the executing the operation of reducing power consumption based on the first instruction information comprises:
making, by the terminal, RLM measurement according to a reconfigured RRM measurement configuration, if the terminal receives the dedicated RRC signaling sent by the network;
stopping, by the terminal, making measurement for the deactivated RRM measurement configuration and stopping reporting a corresponding measurement according to an instruction of the first instruction information, if the terminal receives the first instruction information which is sent by the network using the MAC CE or the PDCCH.

18. The method according to any one of claims 1-17, wherein the first request message is further used for requesting to reduce a configuration of the terminal, wherein the requesting to reduce the configuration of the terminal comprises:
requesting a network side to configure a measuring mode with reduced accuracy.

19. The method according to claim 18, wherein the receiving, by the terminal, the first instruction information sent by the network comprises:
receiving, by the terminal, the first instruction information which is sent by the network using RRC signaling or a MAC CE or a PDCCH, wherein the first instruction information is used for instructing that the terminal is allowed to make measurement using the measuring mode with reduced accuracy.

20. The method according to claim 19, wherein the executing the operation of reducing power consumption based on the first instruction information comprises:
making, by the terminal, measurement using the measuring mode with reduced accuracy based on the first instruction information.

21. An apparatus for reducing terminal power consumption, comprising:
a sending unit, configured to send a first request message to a network, wherein the first request message is used for requesting to reduce terminal power consumption;
a receiving unit, configured to receive first instruction information sent by the network;
an executing unit, configured to execute an operation of reducing power consumption based on the first instruction information.

22. The apparatus according to claim 21, wherein the sending unit is configured to send the first request message to the network when a first condition is met.

23. The apparatus according to claim 22, wherein the sending unit is configured to: send the first request message to the network when it is detected that power of the terminal is less than or equal to a first threshold; or, send the first request message to the network when it is detected that a heating degree of the terminal is greater than or equal to a second threshold.

24. The apparatus according to any one of claims 21-23, wherein the first request message is further used for requesting to reduce a configuration of the terminal, wherein the requesting to reduce the configuration of the terminal comprises:
requesting a maximum MCS used by a network side; or,
suggesting an MCS list used by the network side.

25. The apparatus according to claim 24, wherein the first request message is used for the network side to execute the following operation:
setting scheduling information according to the maximum MCS requested to use or the MCS list suggested using.

26. The apparatus according to any one of claims 21-25, wherein the first request message is further used for requesting to reduce a configuration of the terminal, wherein the requesting to reduce the configuration of the terminal comprises:
requesting a network side to send updated system broadcast information and/or PWS information through dedicated RRC signaling.

27. The apparatus according to claim 26, wherein the receiving unit is configured to: receive the dedicated RRC signaling sent by the network, wherein the dedicated RRC signaling is used for configuring a first control resource set on a BWP of the terminal, and the first control resource set is used for monitoring a P-RNTI and an S-RNTI; or, receive the first instruction information sent by the network, wherein the first instruction information is used for instructing the terminal not to monitor the P-RNTI and the S-RNTI and/or to ignore a configuration of the first control resource set.

28. The apparatus according to claim 27, wherein the first instruction information is a MAC CE or a PDCCH or RRC signaling.

29. The apparatus according to claim 27 or 28, wherein the executing unit is configured to stop monitoring the P-RNTI and the S-RNTI.

30. The apparatus according to any one of claims 21-29, wherein the first request message is further used for requesting to reduce a configuration of the terminal, wherein the request to reduce the configuration of the terminal comprises:
requesting a network side to reduce the number of an RS; or,
giving a maximum number of the RS to the network side;
wherein the RS is used for wireless link detection.

31. The apparatus according to claim 30, wherein the receiving unit is configured to: receive dedicated RRC signaling sent by the network, wherein the dedicated RRC signaling is used for reconfiguring an RS for RLM measurement; or, receive the first instruction information which is sent by the network using a MAC CE or a PDCCH, wherein the first instruction information is used for indicating a deactivated RS configuration for the RLM measurement.

32. The apparatus according to claim 31, wherein the first instruction information comprises first bitmap information, each bit in the first bitmap information corresponds to one RS configuration for the RLM measurement, and a value of the bit is used for representing whether a corresponding RS configuration is deactivated or activated.

33. The apparatus according to claim 31 or 32, wherein the executing unit is configured to: make the RLM measurement according to a reconfigured RS, if the receiving unit receives the dedicated RRC signaling sent by the network; stop making measurement for the deactivated RS configuration according to an instruction of the first instruction information, if the receiving unit receives the first instruction information which is sent by the network using the MAC CE or the PDCCH.

34. The apparatus according to any one of claims 21-33, wherein the first request message is further used for requesting to reduce a configuration of the terminal, wherein the requesting to reduce the configuration of the terminal comprises:
requesting a network side to reduce the number of an RRM measurement configurations; or,
giving a maximum number of the RRM measurement configuration to the network side; or,
a list of frequencies and/or a list of RATs that the network side is expected to measure; or,
a list of frequencies and/or a list of RATs that the network side is not expected to measure.

35. The apparatus according to claim 34, wherein the receiving unit is configured to: receive dedicated RRC signaling sent by the network, wherein the dedicated RRC signaling is used for reconfiguring RRM measurement; or, receive the first instruction information which is sent by the network using a MAC CE or a PDCCH, wherein the first instruction information is used for indicating a deactivated RRM measurement configuration.

36. The apparatus according to claim 35, wherein the first instruction information comprises second bitmap information, each bit in the second bitmap information corresponds to one RRM measurement configuration, and a value of the bit is used for representing whether a corresponding RRM measurement configuration is deactivated or activated.

37. The apparatus according to claim 35 or 36, wherein the executing unit is configured to: make RLM measurement according to a reconfigured RRM measurement configuration, if the receiving unit receives the dedicated RRC signaling sent by the network; stop making measurement for the deactivated RRM measurement configuration and stop reporting a corresponding measurement according to an instruction of the first instruction information, if the receiving unit receives the first instruction information which is sent by the network using the MAC CE or the PDCCH.

38. The apparatus according to any one of claims 21-37, wherein the first request message is further used for requesting to reduce a configuration of the terminal, wherein the requesting to reduce the configuration of the terminal comprises:
requesting a network side to configure a measuring mode with reduced accuracy.

39. The apparatus according to claim 38, wherein the receiving unit is configured to receive the first instruction information which is sent by the network using RRC signaling or a MAC CE or a PDCCH, wherein the first instruction information is used for instructing that the terminal is allowed to make measurement using the measuring mode with reduced accuracy.

40. The apparatus according to claim 39, wherein the executing unit is configured to make measurement using the measuring mode with reduced accuracy based on the first instruction information.

41. A terminal, comprising: a processor and a memory, wherein the memory is configured to store a computer program, and the processor is configured to call and run the computer program stored in the memory to execute the method according to any one of claims 1-20.

42. A chip, comprising: a processor, configured to call and run a computer program from a memory, so that a device installed with the chip executes the method according to any one of claims 1-20.

43. A computer readable storage medium, configured to store a computer program that causes a computer to execute the method according to any one of claims 1-20.

44. A computer program product, comprising computer program instructions that cause a computer to execute the method according to any one of claims 1-20.

45. A computer program, wherein the computer program causes a computer to execute the method according to any one of claims 1-20.
